# EUROPEAN PATENT APPLICATION

(11) **EP 4 756 996 A1**
(43) Date of publication of application: **10.06.2026**
(21) Application number: 25220560.4
(22) Date of filing: 03.12.2025
(51) Int. Cl.: H01M 10/613, H01M 10/647, H01M 50/291, H01M 10/6557

(54) **IMMERSION COOLING MODULE, METHOD AND USE THEREOF**

(30) Priority: 04.12.2024 KR 20240178694
(71) Applicant: SK Innovation Co., Ltd., Seoul 03188 (KR); SK On Co., Ltd., Seoul 03161 (KR)
(72) Inventor: JUNG, In Sik, 34124 Daejeon (KR); MIN, Gi Hong, 34124 Daejeon (KR)
(74) Representative: Prüfer & Partner mbB Patentanwälte · Rechtsanwälte

(57) **Abstract**

Proposed is an immersion cooling module including a housing configured to contain a cooling fluid, and a battery module submerged in the cooling fluid inside the housing, wherein the battery module includes a buffer member provided on stacked surfaces of battery cells and configured to have a buffer space into which an inflow of the cooling fluid is blocked or controllable by a rupture film.

## Description

### BACKGROUND

### Technical Field

The present disclosure relates to an immersion cooling module and further relates to a cooling method and to a use of an immersion cooling module for cooling one or more battery cells provided in a battery module.

### Description of the Related Art

In recent years, as mobile devices such as mobile phones and laptops have become smaller and lighter, and electric vehicles and hybrid vehicles demand high-capacity power sources, a variety of batteries are being developed and used.

In the case of secondary batteries, efficiency is becoming increasingly important depending on the application field, but problems such as heat generation and fires during charging or operation occur due to the external factors.

Accordingly, technologies are being developed to increase the operating efficiency of secondary batteries and ensure safety. Moreover, a recent surge in electricity usage has led to increased carbon emissions and exacerbated global warming concerns, which has called for more efficient device operation mechanisms, and improved cooling methods and maximization of cooling efficiency therefor.

### Document of Related Art

(Patent Document 1) Korean Patent No. 10-2560884

### SUMMARY

According to an aspect of the present disclosure, provided is an immersion cooling module that implements immersion cooling for effectively cooling a battery module and effectively preventing thermal expansion and fire propagation in battery cells that make up the battery module.

In order to achieve the above objectives, according to a general aspect of the present disclosure, there is provided an immersion cooling module including: a housing configured to contain a cooling fluid; and a battery module submerged in the cooling fluid inside the housing, wherein the battery module may include a buffer member provided on stacked surfaces of battery cells and configured to have a buffer space into which an inflow of the cooling fluid is blocked or controllable by a rupture film.

In this case, the buffer member may include the rupture film provided on one or both sides of upper and lower sides of the buffer space formed inside the buffer member, wherein the rupture film may be rupturable by a predetermined pressure due to contraction or relaxation of the buffer space, so that the cooling fluid may flow into the buffer space.

In addition, the buffer member may be provided on the stacked surfaces of the battery cells, may have the buffer space formed to cover some areas in a center of the stacked surfaces of the battery cells, and may preferably include an extension portion extending upwards or downwards from the buffer space to support the stacked surfaces of the battery cells.

In addition, the rupture film may include a rupture portion provided on the rupture film so as to be rupturable by a predetermined pressure due to expansion or contraction of the battery cells, wherein the rupture portion may be provided with a relatively lesser thickness on the rupture film.

In an embodiment, the rupture portion may be made of the same material as that of the rupture film.

In an embodiment, the rupture film may comprises: a rupture portion that may be provided on the rupture film so as to be rupturable by a predetermined pressure due to expansion or contraction of the battery cells, and the rupture portion may be made of a different material having a lower elongation than that of the rupture film.

In an embodiment, the buffer member may include at least one rupture film. Preferably, one rupture film having a single-layered structure may be provided.

In an embodiment, two or more rupture films may respectively be provided in the buffer member. Optionally, the two or more rupture films may be arranged to form a multi-layered structure.

In an embodiment, the extension portion may be arranged to be formed integrally with the buffer member, and/or may be configured to support a separate area from that supported by the buffer space, so that heat transfer between battery cells can be blocked in the remaining area other than the area supported by the buffer space when the rupture film of the buffer member is ruptured and the buffer space is reduced.

In another general aspect of the present disclosure, provided is a method for operating cooling of one or more battery modules, the method comprising:
providing a housing and filling the housing with a cooling fluid; submerging one or more battery modules in the cooling fluid inside the housing. The one or more battery modules comprise a buffer member provided on stacked surfaces of battery cells and configured to have a buffer space, which originally is free of cooling fluid, wherein an inflow of the cooling fluid into the buffer space is blocked or controlled by a rupture film.

In an embodiment, the rupture film is rupturable by a predetermined pressure due to contraction or relaxation of the buffer space, so that the cooling fluid is allowed to flow into the buffer space.

In an embodiment, a rupture portion may be provided on the rupture film so as to be rupturable by a predetermined pressure due to expansion or contraction of the battery cells, and the rupture portion may be configured to have a relatively lesser thickness on the rupture film.

In an embodiment, a rupture portion may be provided on the rupture film so as to be ruptured by a predetermined pressure due to expansion or contraction of the battery cells, and the rupture portion may be configured to be made of a different material having a lower elongation than that of the rupture film.

In an embodiment, the cooling method may further comprise: supporting, by an extension portion, a separate area from an area supported by the buffer space so that heat transfer between the battery cells may be blocked in the remaining area other than the area supported by the buffer space when the rupture film of the buffer member is ruptured and the buffer space is reduced. Optionally, the extension portion is configured to be formed integrally with the buffer member or provided in a form combined with the buffer member in the relevant area.

In an embodiment, when the battery cells expand in a state where the buffer member is joined between the battery cells so that the rupture film is broken, the cooling fluid may be allowed to flow into the buffer space of the buffer member. Preferably, the cooling fluid is allowed to flow into the buffer space of the buffer member through two opposite openings formed by two broken rupture portions.

According to another general aspect of the present disclosure, provided is a use of an immersion cooling module for cooling one or more battery cells provided in a battery module by controlling a flow of a cooling fluid into a buffer space comprised in the battery module, which buffer space 21 originally is free of cooling fluid (L). An inflow of the cooling fluid into the buffer space may be blocked or controlled by a rupture film which is rupturable by a predetermined pressure due to contraction or relaxation of the buffer space, whereupon the cooling fluid is allowed to flow into the buffer space.

The features and advantages of the present disclosure will become more apparent from the following detailed description based on the accompanying drawings.

Prior to this, terms or words used in this specification and claims should not be construed in their usual, dictionary meaning, and should be interpreted with meaning and concept consistent with the technical idea of the present disclosure on the basis of the principle that the inventor can define terminology appropriately to explain his or her invention in the best way possible.

According to an embodiment of the present disclosure, by submerging a battery module in a cooling fluid, cooling efficiency can be improved and physical deformation, such as from thermal expansion, of battery cells of the battery module can be effectively buffered.

Furthermore, when deformation due to thermal expansion in battery cells of a battery module exceeds a preset threshold, a cooling fluid is introduced into an area between the stacked surfaces of the battery cells to block heat transfer between the battery cells.

Furthermore, cooling efficiency for a battery module can be increased, and thermal expansion and fire propagation within the battery module can be effectively prevented.

Furthermore, by minimizing the risk of battery cell damage and effectively extending the lifespan of a device, it is possible to effectively reduce carbon emissions from electricity use by increasing overall energy efficiency and minimizing waste.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a cross-sectional view of an immersion cooling module according to a first embodiment of a buffer member according to an embodiment of the present disclosure;
FIG. 2 is a cross-sectional view of an immersion cooling module according to a modified example of a first embodiment of a buffer member according to an embodiment of the present disclosure;
FIG. 3 is a perspective view of a battery module according to an embodiment of the present disclosure;
FIG. 4 is a cross-sectional view of a first embodiment of a buffer member according to an embodiment of the present disclosure;
FIG. 5 is a cross-sectional view of a modified example of a first embodiment of a buffer member according to an embodiment of the present disclosure;
FIG. 6 is a cross-sectional view of a second embodiment of a buffer member according to an embodiment of the present disclosure;
FIG. 7 is a cross-sectional view of a modified example of a second embodiment of a buffer member according to an embodiment of the present disclosure; and
FIG. 8 is a schematic view of the operation of a buffer member of an immersion cooling module according to an embodiment of the present disclosure.

### DETAILED DESCRIPTION

Terms used to describe an embodiment of the present disclosure are not intended to limit the disclosure. It should be noted that singular expressions include plural expressions unless the context clearly dictates otherwise.

It should be noted that, in assigning reference numerals to components in the drawings, identical components are assigned the same reference numerals as much as possible even if they are shown in different drawings, and similar reference numbers are assigned to similar components.

The drawings may be schematic or exaggerated for the purpose of illustrating the embodiments. In this document, expressions such as "have", "may have", "include", or "may include" refer to the presence of the corresponding feature (e.g., a numerical value, function, operation, or component such as a part), and do not exclude the presence of additional features.

Terms such as "one", "other", "another", "first", "second", etc., are used to distinguish one component from another component, and the components are not limited by the terms.

Hereinafter, an embodiment of the present disclosure will be described in detail with reference to the attached drawings.

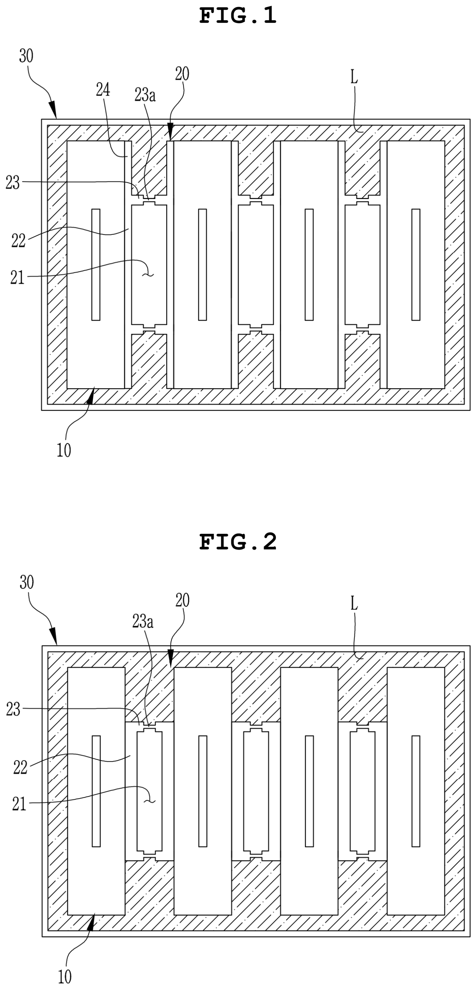

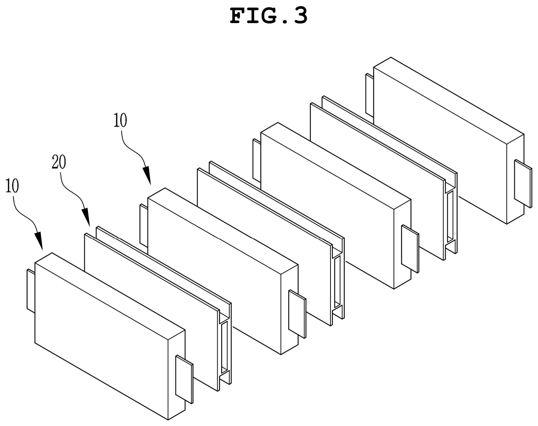

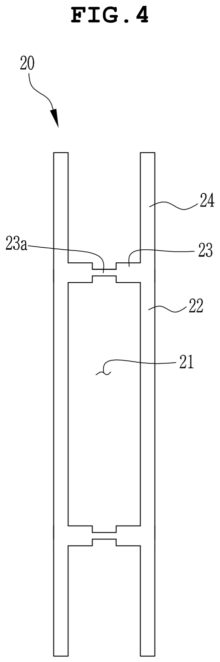

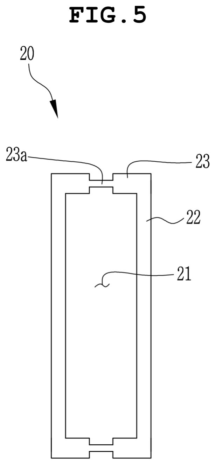

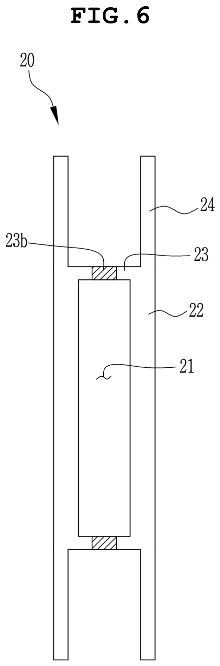

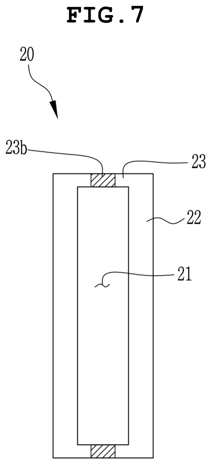

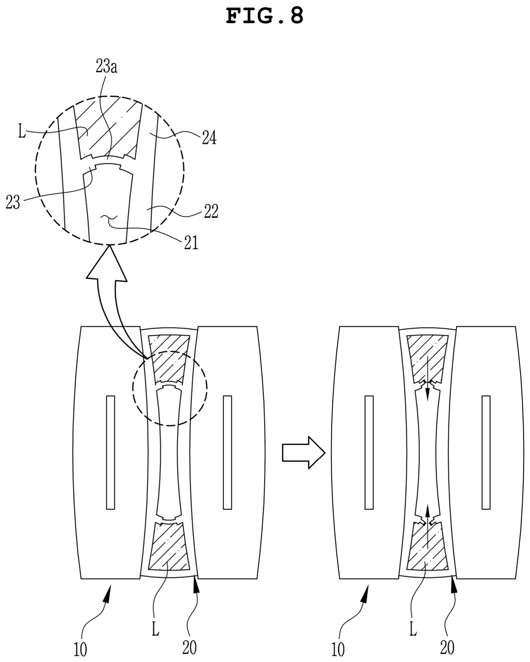

FIG. 1 is a cross-sectional view of an immersion cooling module according to a first embodiment of a buffer member 20 according to an embodiment of the present disclosure; FIG. 2 is a cross-sectional view of an immersion cooling module according to a modified example of the first embodiment of the buffer member 20 according to an embodiment of the present disclosure; FIG. 3 is a perspective view of a battery module according to an embodiment of the present disclosure; FIG. 4 is a cross-sectional view of the first embodiment of the buffer member 20 according to an embodiment of the present disclosure; FIG. 5 is a cross-sectional view of a modified example of the first embodiment of the buffer member 20 according to an embodiment of the present disclosure; FIG. 6 is a cross-sectional view of a second embodiment of the buffer member 20 according to an embodiment of the present disclosure; FIG. 7 is a cross-sectional view of a modified example of the second embodiment of the buffer member 20 according to an embodiment of the present disclosure; and FIG. 8 is a schematic view of the operation of the buffer member 20 of an immersion cooling module according to an embodiment of the present disclosure.

An immersion cooling module according to an embodiment of the present disclosure may include: a housing 30 containing a cooling fluid L; and a battery module submerged in the cooling fluid L inside the housing 30. The battery module may include a buffer member 20 provided on the stacked surfaces of battery cells 10 and having a buffer space 21 into which the inflow of the cooling fluid L is blocked or controllable by a rupture film 23. By providing the buffer member and the buffer space, into which an inflow of the cooling fluid is blocked or controllable, it is possible to control the inflow of the cooling fluid L by the rupture film. Specifically, the blocked inflow of the cooling fluid L, in the context of the present disclosure, may relate to an architecture/structure/state in which the inflow is under control, prevented or blocked in a state in which the rupture film 23 is intact (i.e., not ruptured). In the intact or not ruptured state, the rupture film 23 may be impermeable to liquid, so that the cooling fluid L may not permeate through or penetrate the rupture film 23 which may thus act as a barrier. The rupture film 23 may be rupturable to become a ruptured state, whereupon the cooling fluid L is allowed to flow into the buffer space 21. The ruptured state of the rupture film 23 may be adopted by a predetermined pressure due to contraction or relaxation of the buffer space 21, or may be adopted by a temperature rise. Accordingly, whether the state of the rupture film 23 may depend on a pressure under given circumstances: under normal circumstances, rupture film 23 remains intact, whereas under abnormal circumstances, such as pressure rise or pressure drop, or temperature rise, the rupture film 23 is ruptured as a response for allowing the cooling liquid L to inflow into the buffer space 21.

As shown in FIGS. 1 and 2, the immersion cooling module according to an embodiment of the present disclosure may cool the battery module by placing the battery module in containing the cooling fluid L.

The housing 30 contains the cooling fluid L and can cool the battery module by immersing it in the cooling fluid L.

As the cooling fluid L, a non-conductive fluid may be used to prevent electricity from flowing through a battery module, an electronic product, or a server, etc., that is immersed. As the cooling fluid L, an electrically insulating fluid may be used which may be a liquid under ambient conditions. Base oil may also be applied as the cooling fluid L. The base oil may include mineral oil, polyalphaolefin (PAO), and/or ester base oil. However, the cooling fluid L of the present disclosure is not limited thereto, and any fluid that performs cooling of the battery cell 10 may be included.

As shown in FIG. 3, the buffer member 20 may be coupled to the stacked surfaces of battery cells 10.

By positioning between battery cells 10, the buffer member 20 may perform a buffering function between battery cells 10 against physical expansion of the battery cells 10 or may effectively block and prevent heat transfer due to explosion or fire of the battery cells 10.

The buffer member 20 may be made of a material having a predetermined elasticity to buffer the physical expansion of the battery cell 10, and may be made of a material having insulating properties for electrical and/or thermal insulation.

The buffer member 20 may be provided between the stacked surfaces, preferably side surfaces, of battery cells 10, and when the battery module is submerged in the cooling fluid L, may prevent the cooling fluid L from flowing into the buffer space 21 formed therein by means of the rupture film 23. The buffer member 20 may appropriately contain air, but gases that may cause fire cannot be applied, and may contain fire extinguishing substances for fire prevention.

The buffer space 21 may offer an effective buffering effect by securing a space in which a buffer support wall 22 constituting the buffer space 21 can be physically deformed in response to physical expansion or contraction of the battery cell 10, and by applying an electrically- and/or heat-insulating material to the buffer support wall 22 constituting the buffer space 21, electrical and chemical risks to the battery cells 10 may be blocked in advance.

In the buffer member 20, the buffer space 21 may be created by providing the rupture film 23 at each of the top and bottom of the buffer space 21.

As shown in FIG. 1, the rupture film 23 may be provided on the buffer member 20 such that one side thereof is in contact with the buffer space 21 and the other side thereof is in contact with the cooling fluid L. Due to the rupture film 23, the cooling fluid L does not flow into the buffer space 21 of the buffer member 20, and the cooling fluid L fills the upper and lower spaces surrounding the buffer member 20 to cool the stacked surfaces of the battery cells 10.

The buffer member 20 may be provided with the rupture film 23, and an extension portion 24 extending upwards or downwards from the rupture film 23 and closely contacting the facing surfaces of adjacent battery cells 10 regarding the stacked surfaces of the battery cells 10. Due to the extension portion 24, heat transfer between battery cells 10 due to explosion of a battery cell 10 may be completely blocked. The extension portion 24 may be formed integrally with the buffer member 20 or provided in a form combined with the buffer member 20 in the relevant area.

The extension portion 24 is configured to support a separate area from that supported by the buffer space 21, and as described later, may effectively block heat transfer between battery cells 10 in the remaining area other than the area supported by the buffer space 21 when the rupture film 23 of the buffer member 20 is ruptured and the buffer space 21 is reduced.

Alternatively, as shown in FIG. 2, the buffer member 20 may be provided in an area corresponding to the central portions of the stacked surfaces of adjacent battery cells 10, so that the cooling fluid L can freely flow into the remaining area between the stacked surfaces of the battery cells 10 where the buffer member 20 is not provided, and directly contact the stacked surfaces of the battery cells 10, thereby increasing cooling efficiency for the battery cells 10 at the upper and lower portions of the battery cells 10.

As shown in FIGS. 4 and 5, the rupture film 23 of the buffer member 20 may be broken by a predetermined pressure due to the expansion or contraction of a battery cell 10 when the battery cell 10 physically expands or the volume increases rapidly due to an explosion, etc. When the rupture film 23 that was blocking the inflow of the cooling fluid L into the buffer space 21 is ruptured, the cooling fluid L naturally flows into the buffer space 21. As the cooling fluid L flows into the buffer space 21, the rapid temperature increase between the stacked surfaces of the battery cells 10 may be alleviated, and the operational stability of the entire battery module or a device to which the battery module is applied may be secured from the risk of explosion of a battery cell 10.

The rupture film 23 of the buffer member 20 is configured to be cut or broken by the pressure generated when the buffer support wall 22 constituting the buffer space 21 experiences rapid physical change due to expansion or contraction of a battery cell. To this end, a rupture portion 23a may be provided on the rupture film 23 to control the cutting or breaking position or degree of the rupture of the rupture film 23.

As shown in FIGS. 4 and 5, the rupture portion 23a may be formed with a relatively lesser thickness on the rupture film 23. The rupture portion 23a may be formed with a relatively lesser thickness on the rupture film 23 so as to be more easily ruptured by external pressure applied. The difference in the relative thickness of the rupture portion 23a formed on the rupture film 23 may be appropriately set and applied by considering the physical deformation range due to the specifications or power of a battery module to which the buffer member 20 is applied.

In addition, as shown in FIGS. 6 and 7, the rupture portion 23b may be formed on the rupture film 23, but may be made of a different material having a relatively lower elongation than that of the rupture film 23. In addition, even in the case of using the same material rather than using a different material, the physical structure may be changed and applied to lower the elongation. The higher the elongation of a material, the more flexibly the material can respond to deformation caused by external impact. Thus, by applying a structure or material with low elongation to a predetermined location of the rupture film 23 for the rupture portion 23b, the corresponding location where the rupture portion 23b of the rupture film 23 is formed may be preferentially broken by external pressure.

In case that the rupture portion 23b is formed on the rupture film 23 using a different material, the rupture portion 23b may be formed by joining the rupture portion 23b to the rupture film 23 at the location of rupture or, depending on the material, by manufacturing the rupture portion 23b so as to be joined to the rupture film 23 as one piece.

As shown, a single rupture film 23 may be provided, but a plurality of rupture films 23 may be provided in multiple stages depending on the degree of physical deformation applied, and thus in an embodiment of the present disclosure, at least one rupture film 23 may be provided. In this case, the plurality of rupture films 23 may be arranged such that the buffer space 21 is partitioned into multiple sub-spaces, and the rupture films 23 may rupture sequentially in response to varying levels of physical deformation applied to the battery cells 10.

To be specific, FIG. 8 shows a case where a physical deformation, such as expansion, occurs in battery cells 10 while the buffer member 20 is joined between the battery cells 10.

When the battery cells 10 expand in a state where the buffer member 20 is joined between the battery cells 10, the buffer space 21 of the buffer member 20 is reduced. As the buffer space 21 is reduced, the rupture film 23 is consequently broken due to physical deformation of the buffer support wall 22 of the buffer space 21. In case that the rupture portion 23a is formed, the rupture portion 23a may be broken relatively more quickly.

When the rupture portion 23a of the rupture film 23 is broken in this way, the cooling fluid L outside immediately flows into the buffer space 21 of the buffer member 20, thereby responding to a battery cell 10 fire or explosion. In addition, a double heat-insulating barrier may be formed by preventing heat transfer between battery cells 10 by utilizing the electrically-insulating properties and/or heat-insulating properties of the material(s) that is/are comprised in the buffer member 20.

Each buffer member 20 may include at least one rupture film 23, while two or more rupture films 23 may also be provided in each buffer member 20. As schematically illustrated in FIG. 8, when the buffer member 20 includes more than one rupture portion 23a, such as two opposite rupture portions 23a, cooling efficiency may be significantly increased as a result of an enhanced flow of cooling fluid L into the buffer space 21 of the buffer member 20. Opposite inflow directions of the cooling fluid L into the buffer space 21 of the buffer member 20 may thus be realized, which may not only increase cooling efficiency but also alleviate safety issues in an event of failure of battery cell 10.

According to a general aspect, a method for cooling one or more battery modules may comprise: providing a housing 30 and filling the housing 30 with a cooling fluid L; submerging one or more battery modules in the cooling fluid L inside the housing 30. The one or more battery modules may comprise a buffer member 20 provided on stacked surfaces of battery cells 10 and configured to have a buffer space 21 into which an inflow of the cooling fluid L is controllable or blocked by a rupture film 23. Preferably, the rupture film 23 may be rupturable by a predetermined pressure due to contraction or relaxation of the buffer space 21, so that the cooling fluid L flows into the buffer space 21.

In an embodiment, a rupture portion 23a may be provided on the rupture film 23 so as to be rupturable by a predetermined pressure due to expansion or contraction of the battery cells 10 included in the battery module, and said rupture portion 23a may additionally be configured to have a relatively lesser thickness on the rupture film 23, as described above.

Alternatively, a rupture portion 23b may be provided on the rupture film 23 so as to be ruptured by a predetermined pressure due to expansion or contraction of the battery cells 10 included in the battery module, and said rupture portion 23b may be configured to be made of a different material having a lower elongation than that of the rupture film 23. In this case, the rupture portion 23b may have the same thickness as the rupture film 23.

The method may further comprise: supporting, by an extension portion 24, a separate area from an area supported by the buffer space 21 so that heat transfer between the battery cells 10 may be blocked in the remaining area other than the area supported by the buffer space 21 when the rupture film 23 of the buffer member 20 is ruptured and the buffer space 21 is reduced. Preferably, the extension portion 24 is configured to be formed integrally with the buffer member 20 or provided in a form combined with the buffer member 20 in the relevant area.

When the battery cells 10 expand in a state where the buffer member 20 is joined between the battery cells 10 included in the battery module so that the rupture film 23 is broken, the cooling fluid L may be allowed to immediately flow into the buffer space 21 of the buffer member 20. Preferably, the cooling fluid L may be allowed to flow into the buffer space 21 of the buffer member 20 through two opposite openings formed by two broken rupture portions 23a, 23b. Such preferred opposite inflow of the cooling fluid L may particularly increase cooling efficiency and increase cooling rate.

In some embodiments, more than one rupture film 23 may be provided in each of the buffer members 20 included in the battery module, so that higher physical deformation may be sustained before rupture of the rupture films 23 occurs. By the provision of more than one rupture film 23, which may form a multi-layered structure, in each of the buffer members 20, increased deformation forces and strain may be sustained, which may increase durability and prevent undesired film rupture or cracking in an event of normal battery cell 10 operation (that is, before an event of battery cell 10 failure is yet to occur).

According to another general aspect, an immersion cooling module as described above may be used for cooling one or more battery cells 10 provided alongside one or more buffer members 20 in a battery module by controlling a flow of a cooling fluid L into a buffer space (21) comprised in the battery module or, more precisely, comprised in each of the one or more buffer members 20.

Above, the present disclosure has been described in detail through specific embodiments. The embodiments are for specifically explaining the present disclosure, and are only illustrative and do not limit the scope of the appended claims. It is obvious to those skilled in the art that various changes and modifications to the embodiments are possible within the scope and technical idea of the present disclosure, and it is natural that such changes and modifications fall within the scope of the appended claims.

## Claims

1. An immersion cooling module comprising:
a housing (30) configured to contain a cooling fluid (L); and
a battery module submerged in the cooling fluid (L) inside the housing (30),
wherein the battery module comprises:
a buffer member (20) provided on stacked surfaces of battery cells (10) and configured to have a buffer space (21) into which an inflow of the cooling fluid (L) is blocked or controllable by a rupture film (23).

2. The module of claim 1, wherein the buffer member (20) comprises:
the rupture film (23) provided on one or both sides of upper and lower sides of the buffer space (21) formed inside the buffer member (20),
wherein the rupture film (23) is rupturable by a predetermined pressure due to contraction or relaxation of the buffer space (21), so that the cooling fluid (L) can flow into the buffer space (21).

3. The module of claim 1 or 2, wherein the buffer member (20) is provided on the stacked surfaces of the battery cells (10), has the buffer space (21) formed to cover some areas in a center of the stacked surfaces of the battery cells (10), and
optionally includes an extension portion (24) extending upwards or downwards from the buffer space (21) to support the stacked surfaces of the battery cells (10).

4. The module of any one of claims 1 to 3, wherein the rupture film (23) comprises:
a rupture portion (23a) provided on the rupture film (23) so as to be rupturable by a predetermined pressure due to expansion or contraction of the battery cells (10),
wherein the rupture portion (23a) is provided with a relatively lesser thickness on the rupture film (23).

5. The module of claim 4, wherein the rupture portion (23a) is made of the same material as that of the rupture film (23).

6. The module of any one of claims 1 to 3, wherein the rupture film (23) comprises:
a rupture portion (23b) provided on the rupture film (23) so as to be rupturable by a predetermined pressure due to expansion or contraction of the battery cells (10),
wherein the rupture portion (23b) is made of a different material having a lower elongation than that of the rupture film (23).

7. The module of any one of claims 1 to 6, wherein the buffer member (20) includes at least one rupture film (23) in the form of a single-layered structure.

8. The module of any one of claims 1 to 6, wherein the buffer member (20) includes two or more rupture films (23),
optionally wherein the two or more rupture films (23) are arranged to form a multi-layered structure.

9. The module of any one of claims 3 to 8, wherein the extension portion (24) is provided and is arranged to be formed integrally with the buffer member (20), and/or
wherein the extension portion (24) is configured to support a separate area from that supported by the buffer space (21), so that heat transfer between battery cells (10) can be blocked in the remaining area other than the area supported by the buffer space (21) when the rupture film (23) of the buffer member (20) is ruptured and the buffer space (21) is reduced.

10. A method for operating cooling of one or more battery modules, the method comprising:
providing a housing (30) and filling the housing (30) with a cooling fluid (L);
submerging one or more battery modules in the cooling fluid (L) inside the housing (30),
wherein the one or more battery modules comprise a buffer member (20) provided on stacked surfaces of battery cells (10) and configured to have a buffer space (21) which originally is free of cooling fluid (L),
wherein an inflow of the cooling fluid (L) into the buffer space (21) is blocked or controlled by a rupture film (23).

11. The method of claim 10, wherein the rupture film (23) is rupturable by a predetermined pressure due to contraction or relaxation of the buffer space (21), whereupon the cooling fluid (L) is allowed to flow into the buffer space (21).

12. The method of claim 10 or 11, wherein a rupture portion (23a) is provided on the rupture film (23) so as to be rupturable by a predetermined pressure due to expansion or contraction of the battery cells (10), and
wherein a rupture portion (23a) is configured to have a relatively lesser thickness on the rupture film (23);
or wherein a rupture portion (23b) is configured to be made of a different material having a lower elongation than that of the rupture film (23).

13. The method of any one of claims 10 to 12, further comprising:
supporting, by an extension portion (24), a separate area from an area supported by the buffer space (21) so that heat transfer between the battery cells (10) can be blocked in the remaining area other than the area supported by the buffer space (21) when the rupture film (23) of the buffer member (20) is ruptured and the buffer space (21) is reduced,
optionally wherein the extension portion (24) is configured to be formed integrally with the buffer member (20) or provided in a form combined with the buffer member (20) in the relevant area.

14. The method of any one of claims 10 to 13, wherein, when the battery cells (10) expand in a state where the buffer member (20) is joined between the battery cells (10) so that the rupture film (23) is broken, the cooling fluid (L) is allowed to flow into the buffer space (21) of the buffer member (20),
preferably wherein the cooling fluid (L) is allowed to flow into the buffer space (21) of the buffer member (20) through two opposite openings formed by two broken rupture portions (23a, 23b).

15. Use of an immersion cooling module for cooling one or more battery cells (10) provided in a battery module by controlling a flow of a cooling fluid (L) into a buffer space (21) comprised in the battery module, which buffer space (21) originally is free of cooling fluid (L),
wherein an inflow of the cooling fluid (L) into the buffer space (21) is blocked or controlled by a rupture film (23) which is rupturable by a predetermined pressure due to contraction or relaxation of the buffer space (21), whereupon the cooling fluid (L) is allowed to flow into the buffer space (21).
